# EUROPEAN PATENT APPLICATION

(11) **EP 0 782 093 A1**
(43) Date of publication of application: **02.07.1997**
(21) Application number: 96119681.3
(22) Date of filing: 09.12.1996
(51) Int. Cl.: G06K 11/18

(54) **Data input means**

(30) Priority: 28.12.1995 GB 9526608
(71) Applicant: THOMSON multimedia S.A., 92400 Courbevoie (FR)
(72) Inventor: Yamamoto, Masaru, Chibaken 277 (JP)
(74) Representative: Ahrens, Thomas, Dipl.-Phys.

(57) **Abstract**

Data input means are proposed which are comparable with a well known computer-mouse and which generate data signals for data processing means, such like a personal computer, a video game machine or thelike.

The data input means are characterized by a first part including sensor means for horizontal movement and a second part which may be catched by a hand of a user. This second part is essentially vertically oriented and can include switch-buttons for triggering any actions of said data processing means.

## Description

The present invention relates to data input means and more precisely to a mouse adapted to interface with data processing means, such as a personal computer (PC), a video game machine or thelike.

Mouses which interface with data processing means are well known. A conventional mouse is such designed that it includes a lower side having movement detector means, such as a ball or an electrical sensor, and an upper side which fits easily into the hollow of the palm a person's hand. The lower and the upper sides of conventional mouses are essentially horizontally designed.

There are also generally known so-called joysticks which can also be used as data-processing input means. Such joysticks are shaped as a stick, which is provided essentially vertically and which runs in bearings with its lower end. The joystick can be tilted out of the vertical position, but cannot be moved in horizontal direction.

From US 5,296,871 there is known a three-dimensional mouse, which has a generally vertical orientation with respect to a user. As it is described in this US-patent, a conventional mouse is well designed to work on a flat surface. When a person's hand rests on a flat surface, the hand automatically goes pronate. Thereby the mouse fits easily into the hollow of the palm when it is in that position.

It has shown that using conventional mouses may cause some inconveniences for the user, because he has to twist his wrist in such a position that the palm rests on the upper surface.

So, it is the object of the invention to present a mouse which is more convenient than known mouses which are designed to work on a surface.

This object is solved by the device according to claim 1. Advantageous embodiments are given by the subclaims.

The mouse according to the present invention includes a first part and a second part, which is provided essentially perpendicular to said first part. A lower surface of said first part includes movement sensing means, as they are well known from conventional mouses. The second part is such shaped that it is adapted to a person's hand and as it is well known from the design of joysticks.

A preferred embodiment includes a first switch-button at a vertical surface of the second part. This first button can be easily activated by the forefinger of the user's hand.

A further embodiment includes a second switch-button essentially on the top of the second part. Said second button can be easily pressed by the thumb of the user's hand. As the thumb can normally better controlled than the middle finger of the hand, the arrangement of the second button has the advantage that it can be better operated than a second button of conventional mouses.

Further details and advantages will now be described by preferred embodiments with the aid of the drawings, where
- Fig. 1: shows a known mouse;
- Fig. 2: shows a known joystick;
- Fig. 3: shows a preferred embodiment of the invention;
- Fig. 4: shows a side view of the embodiment of Fig. 3.

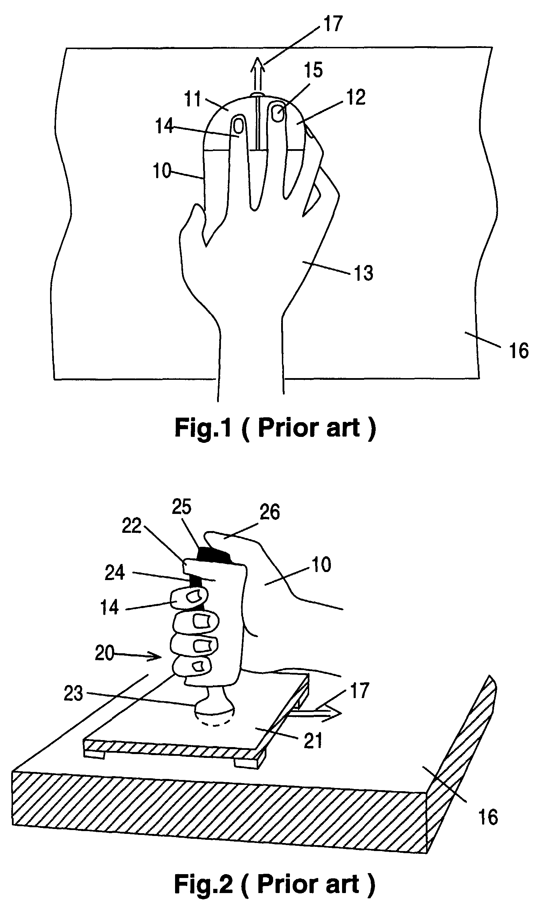

Fig. 1 shows a top view of a well known mouse 10 with a first mouse-button 11 and a second mouse-button 12. A hand 13 of a user is laid on the mouse 10 such that a forefinger 14 can press the first mouse-button 11 and that a middle finger 15 can press the second mouse-button 12. The mouse 10 can be moved on a surface 16, which may be horizontally oriented and which may be part of a table, a desk or thelike. This means that the mouse 10 can be moved in horizontal direction or, more generally, in the any direction of the orientation of the surface 16. The horizontal movement is detected by not shown sensor means and output signal of said sensors and of switches activated by the buttons 11, 12 are led via a cable 17 to data processing means, like a personal computer, a game machine, or thelike.

Fig. 2 shows a well known joystick including a horizontal base plate 21 and a vertical part 22. The vertical part 22 is fixed by a bearing 23, which can be realised as a ball socket in the plate 21 and as a ball at the bottom of the vertical part 22. Not shown resilient means keep the part 22 in a vertical position, or, more generally, in a position perpendicular to the plate 21. The vertical part 22 includes a first joystick-button 24, which can be pressed by the forefinger 14, and a second joystick-button 25, which can be pressed by a thumb 26.

By a movement of the hand 10 the part 22 can be moved by a tilting motion out of its vertical position, but the plate 21 rests on the surface 16. Not shown sensor means detect the tilting motion. The output signals of the sensors and of switches activated by the buttons 24, 25 are led via the cable 17 to the not shown data processing means.

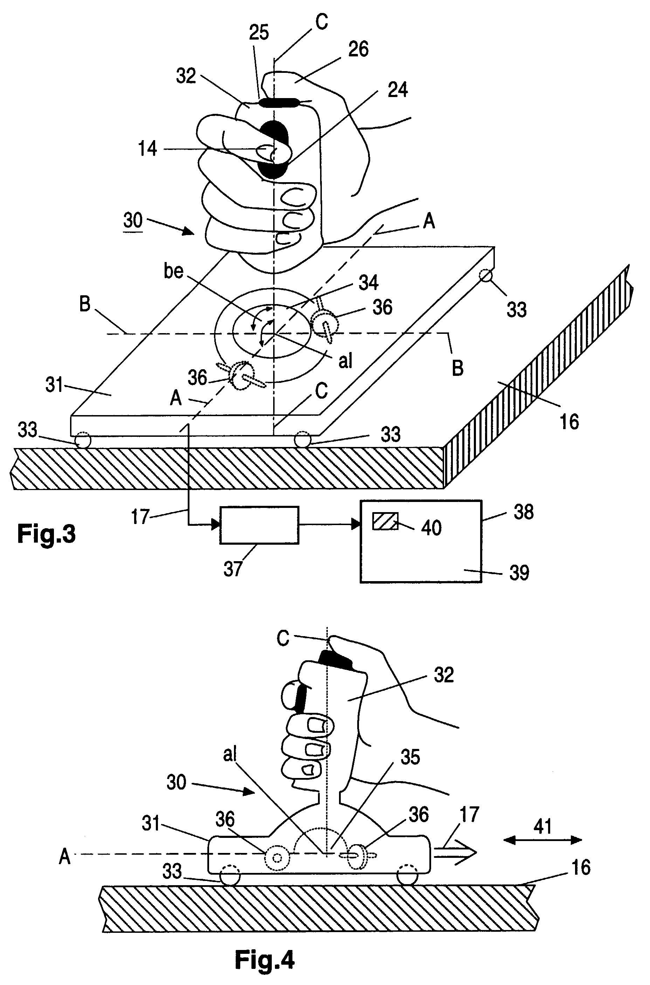

Fig. 3 shows a preferred embodiment of data input means 30. Fig. 4 is a side view of the embodiment of Fig. 3. Means with same functions as means shown in Fig. 1, 2 are indicated with the same reference numbers and will only be explained as far it is necessary for the understanding of the invention.

The data input means 30 include a first part 31, which is preferably realised as a movable base plate and a second part 32, which is fixed to the plate 31. The first part 31 includes a first axis A and a second axis B and the second part 32 includes a third axis C. The axes A and C define an angle al and the axes B and C define an angle be.

It is preferred that the second part 32 is essentially perpendicularly provided to the first part 31, which means that angles al and be are in the range between 45 degrees and 135 degrees. But part 32 may also have any other orientation compared to the part 31, which means that a and/or be can also be smaller or larger, but cannot be 0 degree or 180 degree.

The second part 32 includes the buttons 24, 25, which can be activated by the forefinger 14 or by the thumb 26, respectively.

The plate 31 is supported by rolls 33, which may have the shape of a ball, a reel or thelike. Sensor means 34 include a sensor ball 35 and sensor-wheels 36, which detect the movement of the ball 35. Such sensor means 34 are comparable to those used for a mouse of Fig. 1 and are well known for a person skilled in the art. That is why a further description of said sensor means 34 can be avoided. Output signals of the sensor 34 and of the buttons 24, 25 are led via the cable 17 to data processing means 37, like a personal computer, a game machine, or thelike. The data processing means 37 are connected to display means 38 having a screen 39. On the screen 39 there is displayed a character 40, which can be e.g. a cursor and position of which depends on the output signal of the sensor means 34. Any actions, as it is e.g. known from the MICROSOFT program WINDOWS may be triggered by activating switches connected to button 24 and/or to button 25.

For using the data input means 30, a user catches the part 32 with his hand such that the forefinger is in the position of the first button 24 and that the thumb 26 is in the position of the second button 25. For moving the cursor 40 the user moves the whole data input means in any direction of that plane in which the surface 16 extends. This kind of movement is indicated by an arrow 41 (Fig. 4). This means that in case that the surface 16 is horizontally provided, the means 30 can be moved in any horizontal direction.

When actions shall be triggered by the buttons 24 and/or 25, these buttons are pressed accordingly.

As the hand 13 is in a more natural and convenient position while working with the data input means 30 compared to the position shown in Fig. 1, the data input means of Fig. 3, 4 are more convenient than known mouses 10.
In addition, the buttons 24, 25 provided at the part 32 are more convenient to use than the buttons 11, 12 of Fig. 1, because it is no more necessary to use the middle finger which has less pressure and sensitiveness than the forefinger or the thumb. This can improve the efficiency of operation.

## Claims

1. Data input means (30) having a first part (31) and suitable for a movement on a surface (16) and comprising sensor means (34) which detect a movement along said surface (16), characterized in that said data input means (30) also include a second part (32), which is essentially perpendicularly fixed with said first part (31).

2. Data input means (30) according to claim 1, characterized in that said second part (32) includes a first button (24) to be activated in essentially horizontal direction.

3. Data input means (30) according to claim 1 or 2, characterized in that said second part (32) includes a second button (25) provided at the top of said second part (32).
